# EUROPÄISCHE PATENTANMELDUNG

(11) **EP 4 464 147 A1**
(43) Veröffentlichungstag der Anmeldung: **20.11.2024**
(21) Anmeldenummer: 24161507.9
(22) Anmeldetag: 05.03.2024
(51) Int. Cl.: A01D 34/835, A01D 41/08, A01D 41/14

(54) **ERNTEVORSATZ FÜR EINEN MÄHDRESCHER ZUR ERNTE VON ERNTEGUT MIT AN HALMEN WACHSENDEN KÖRNERN**

(30) Priorität: 27.03.2023 DE 102023107613
(71) Anmelder: Deere & Company, Moline, IL 61265 (US)
(72) Erfinder: MAGISSON, EMMANUEL, 68163 Mannheim (DE)
(74) Vertreter: Holst, Sönke

(57) **Zusammenfassung**

Ein Erntevorsatz (18) für einen Mähdrescher (10) zur Ernte von Erntegut (76) mit an Halmen wachsenden Körnern ist mit einer in einer Vorwärtsrichtung (V) über ein Feld bewegbaren Rahmenkonstruktion (44) ausgestattet, an der eine sich über die gesamte Breite des Erntevorsatzes (18) erstreckende Ernteeinrichtung (46) zur Ernte der Körner des Ernteguts (76), deren Erntegutstrom durch eine rückwärtige Abgabeöffnung (84) des Erntevorsatzes (18) einem Schrägförderer (20) des Mähdreschers (10) zuführbar ist, sowie ein Zusatzschneidwerk (48) zur Bearbeitung der nach der Ernte der Körner durch die Ernteeinrichtung (46) auf dem Feld verbleibenden Halme angebracht sind, wobei der Erntevorsatz (18) einen dem Schrägförderer (20) vorgelagerten, mittleren Abschnitt (50), sowie gegenüber dem mittleren Abschnitt (50) jeweils seitlich versetzt einen linken Abschnitt (54) und einen rechten Abschnitt (52) umfasst. Der Erntevorsatz (18) ist konfiguriert, im mittleren Abschnitt (50) einlaufende Halme gemeinsam mit den Körnern dem Schrägförderer (20) zuzuführen.

## Beschreibung

Die Erfindung betrifft einen Erntevorsatz gemäß des Oberbegriffs des Anspruchs 1.

### Stand der Technik

In der Vergangenheit wurde mehrfach vorgeschlagen, das Schneidwerk eines Mähdreschers bei der Ernte relativ langstieligen Korns in einem so genannten Hochschnittmodus zu betreiben, bei dem der Mähwerksbalken des Schneidwerks in relativ großer Höhe über dem Boden knapp unterhalb der Ähren geführt wird, oder die Ähren mittels eines so genannten Strippers (Abstreifers) von den Halmen zu trennen. Dadurch vermindert man, dass Stroh in relativ energieaufwändiger Weise durch den Mähdrescher zu verarbeiten ist. Die nicht durch den Mähwerksbalken abgetrennten oder nach dem Abstreifen verbleibenden, auf dem Feld stehen bleibenden Halme werden durch geeignete Einrichtungen, so genannte sekundäre oder Zusatzschneidwerke abgeschnitten bzw. zerkleinert und in einem Schwad (DD 117 584 A, DD 243 201 A, FR 2 794 608 A, DE 10 2005 025 319 A1, DE 10 2014 014 871 B3, US 9 788 486 B2) oder über die gesamte Schnittbreite des Mähdreschers verteilt auf dem Feld abgelegt (DD 117 584 A, DD 10 896 A, DD 135 029A, DD 243 201 A, DE 24 18 995 A1, DE 43 24 812 A, DE 43 24 813 C, DE 85 24 124 U, EP 1 378 159 A, EP 1 483 953 A, FR 1 371 068 A, DE 10 2005 025 319 A1, DE 10 2013 107 148 A1, DE 10 2014 014 871 B3, US 9 788 486 B2).

### Aufgabe

Die Zusatzschneidwerke erstrecken sich im Stand der Technik über die gesamte Breite des Erntevorsatzes, d.h. auch unterhalb der Mitte des Erntevorsatzes, an der rückseitig der Schrägförderer angekoppelt ist. Das hat die Nachteile, dass das Zusatzschneidwerk so niedrig zu dimensionieren ist, dass es unterhalb des Schrägförderers Platz findet. Zudem kann der Erntevorsatz im Fall von Lagergetreide nicht weiter abgesenkt werden, als es das Zusatzschneidwerk erlaubt, und schließlich läuft nur sehr wenig von Korn unterschiedliches Material (insbesondere Stroh) durch den Mähdrescher hindurch. Dieses von Korn unterschiedliche Material hat jedoch die Eigenschaft, die Aggressivität der Dresch- und Trenneinrichtungen zu vermindern und somit die Beschädigung des Korns beim Dreschen und Trennen zu reduzieren.

Die der Erfindung zu Grunde liegende Aufgabe wird darin gesehen, einen gegenüber dem Stand der Technik verbesserten, nur die oberen Teile der Pflanzen erntenden Erntevorsatz zur Getreideernte mit einem Zusatzschneidwerk für die Halme auszustatten, das die erwähnten Nachteile nicht oder in vermindertem Maße aufweist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntevorsatz für einen Mähdrescher zur Ernte von Erntegut mit an Halmen wachsenden Körnern umfasst eine in einer Vorwärtsrichtung über ein Feld bewegbare Rahmenkonstruktion, an der eine sich über die gesamte Breite des Erntevorsatzes erstreckende Ernteeinrichtung zur Ernte der Körner des Ernteguts, deren Erntegutstrom durch eine rückwärtige Abgabeöffnung des Erntevorsatzes einem Schrägförderer des Mähdreschers zuführbar ist, sowie ein Zusatzschneidwerk zur Bearbeitung der nach der Ernte der Körner durch die Ernteeinrichtung auf dem Feld verbleibenden Halme angebracht sind. Der Erntevorsatz umfasst einen dem Schrägförderer vorgelagerten, mittleren Abschnitt sowie gegenüber dem mittleren Abschnitt jeweils seitlich versetzt einen linken Abschnitt und einen rechten Abschnitt. Der Erntevorsatz ist konfiguriert, im mittleren Abschnitt einlaufende Halme gemeinsam mit den Körnern dem Schrägförderer zuzuführen.

Mit anderen Worten werden durch die Ernteeinrichtung im linken und rechten Abschnitt des Erntevorsatzes selektiv die Körner des Ernteguts geerntet. Hierzu kann ein Stripper verwendet werden oder ein Schneidwerksbalken und eine Haspel werden im Hochschnittmodus betrieben. Im mittleren Abschnitt des Erntevorsatzes werden durch die Ernteguteinrichtung jedoch nicht nur die Körner geerntet, sondern auch die Halme des Ernteguts und gemeinsam mit den von links und rechts einlaufenden Körnern über eine rückwärtige Abgabeöffnung dem Schrägförderer eines Mähdreschers zugeführt. Die im linken und rechten Abschnitt auf dem Feld stehenbleibenden Halme werden durch die dort angeordneten Zusatzschneidwerke abgeschnitten und in einem Schwad abgelegt oder gehäckselt und verteilt.

Auf diese Weise vermeidet man die oben erwähnten Nachteile. Einerseits wird eine gewisse, im mittleren Abschnitt aufgenommene Menge an Stroh gemeinsam mit den Körnern durch den Schrägförderer und den Mähdrescher geleitet, was die Aggressivität der Dresch- und Trenneinrichtung und somit den Anteil an Bruchkorn im Korntank vermindert, andererseits benötigt man unterhalb des Schrägförderers kein Zusatzschneidwerk, was die konstruktiven Freiheiten und Möglichkeiten sowohl hinsichtlich der Ernteeinrichtung als auch hinsichtlich des Zusatzschneidwerks vergrößert.

### Ausführungsbeispiel

In den Zeichnungen sind vier nachfolgend näher beschriebene Ausführungsbeispiele der Erfindung dargestellt. Es zeigt:
- Fig. 1: eine schematische Seitenansicht eines Mähdreschers mit einem Erntevorsatz zum Ernten der oberen Teile der Pflanzen, welcher mit einem Zusatzschneidwerk für die Halme ausgestattet ist;
- Fig. 2: eine perspektivische Ansicht des Erntevorsatzes der Figur 1 von vorn und oben;
- Fig. 3: eine perspektivische Ansicht des Erntevorsatzes der Figur 1 von unten und hinten;
- Fig. 4: einen vertikalen Schnitt durch den Erntevorsatz entlang der Linie 4-4 der Figur 2 im Schwad betrieb;
- Fig. 5: einen vertikalen Schnitt durch den Erntevorsatz entlang der Linie 5-5 der Figur 2 im Häckselbetrieb;
- Fig. 6: einen Schnitt entsprechend Figur 4 oder 5 mit zum Straßentransport hochgeklapptem Schwadformblech;
- Fig. 7: einen Schnitt entsprechend Figur 4 oder 5 durch eine zweite Ausführungsform des Zusatzschneidwerks;
- Fig. 8: einen Schnitt entsprechend Figur 4 oder 5 durch eine dritte Ausführungsform des Zusatzschneidwerks; und
- Fig. 9: eine perspektivische Ansicht einer weiteren Ausführungsform des Erntevorsatzes.

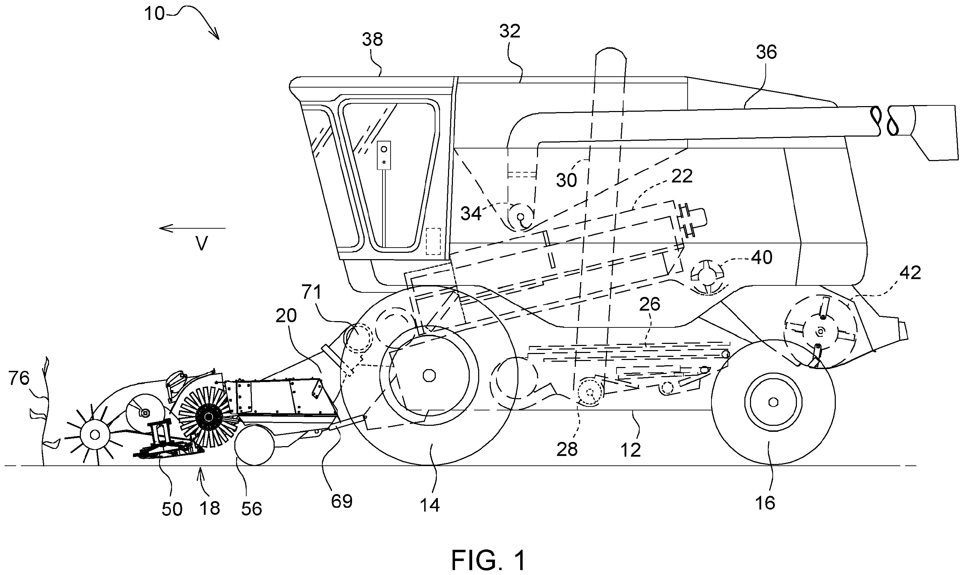

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist an einem Schrägförderer 20 ein Erntevorsatz 18 abnehmbar angeschlossen, um beim Erntebetrieb die Ähren oder Körner von Erntegut 76 in Form von Getreide oder andere, dreschbare Halmfrüchte von dem Feld zu ernten und sie nach oben und hinten durch den (durch einen Zylinder 69 um die Drehachse einer oberen Umlenkwalze 71 des Schrägförderers 20 schwenkbaren und somit höhenverstellbaren) Schrägförderer 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke 28 einem Körnerelevator 30 zugeführt, der es in einen Korntank 32 befördert. Das gereinigte Getreide aus dem Korntank 32 kann durch ein Entladesystem mit einer Querschnecke 34 und einem als Schneckenfördererzusammenbau 36 ausgeführten Entladeförderer entladen werden. Die vom Axialdreschwerk 22 abgegebenen Erntegutreste werden mittels einer Fördertrommel 40 einem Strohhäcksler 42 zugeführt, der sie zerkleinert und über die Breite des Schneidwerks 18 über das Feld verteilt. Die genannten Systeme werden mittels eines Verbrennungsmotors angetrieben und von einem Bediener aus einer Fahrerkabine 38 heraus kontrolliert und gesteuert. Das dargestellte Axialdreschwerk 22 mit einem oder mehreren axialen Dresch- und Trennrotoren ist nur ein Ausführungsbeispiel und könnte beispielsweise durch ein Tangentialdreschwerk einer oder mehreren Dreschtrommeln und nachfolgendem Strohschüttler oder Trennrotor(en) ersetzt werden.

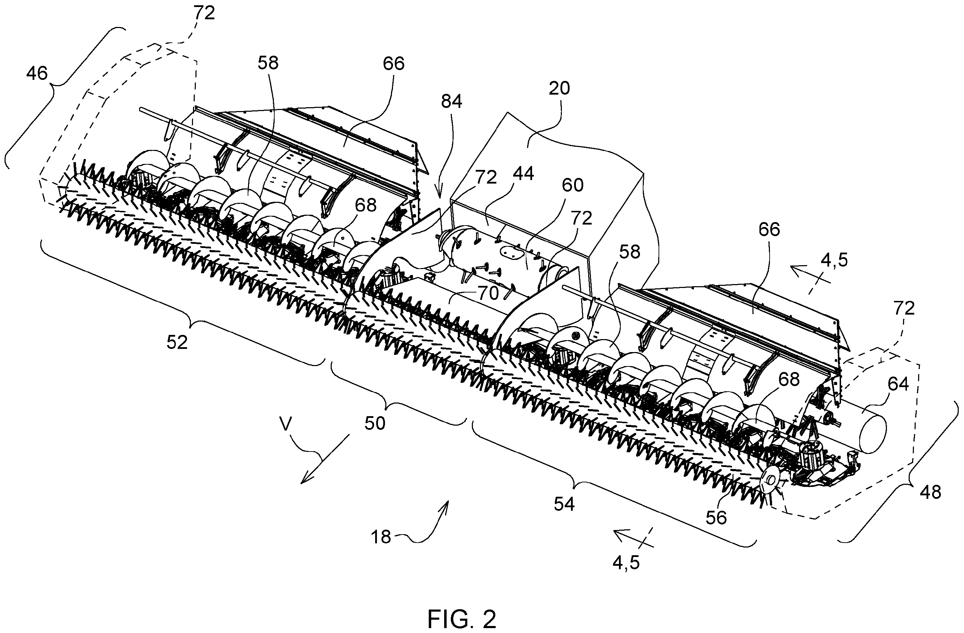

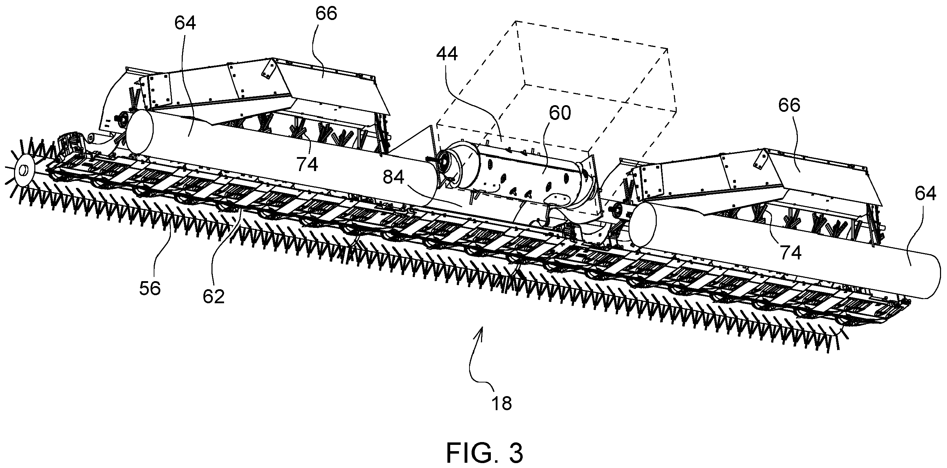

Der Erntevorsatz 18 ist in den Figuren 2 und 3 in perspektivischer Ansicht von links vorn und oben bzw. von links unten und hinten gezeigt. Der Erntevorsatz 18 umfasst eine Rahmenkonstruktion 44, an der vorder- und oberseitig ein erster Bereich angebracht ist, der als Ernteeinrichtung 46 zur Ernte der Körner des Ernteguts 76 dient, während ein zweiter, unterer und rückwärtiger Bereich als Zusatzschneidwerk 48 zur Bearbeitung der Halme vorgesehen ist. Der Erntevorsatz 18 unterteilt sich in seitlicher Richtung in einen mittleren Abschnitt 50, einen bezüglich der Vorwärtsrichtung V rechten Abschnitt 52 und einen linken Abschnitt 54. Rückwärtig des mittleren Abschnitts 50 ist der Erntevorsatz 18 am Schrägförderer 20 lösbar angebracht. Die Breite des mittleren Abschnitts 50 entspricht zumindest näherungsweise der Breite des Schrägförderers 18.

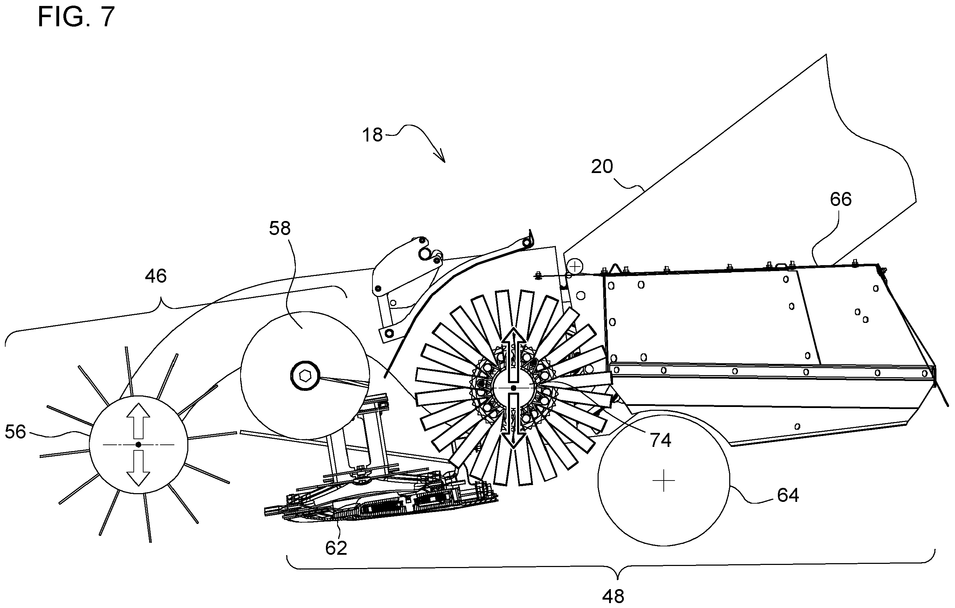

Die Ernteeinrichtung 46 des Erntevorsatzes 18 umfasst einen Abstreifer 56 (so genannter Stripper), der sich in der in den Figuren 2 bis 8 dargestellten Ausführungsform über die gesamte Breite des Erntevorsatzes 18 erstreckt. Der Abstreifer 56 trennt in an sich bekannter Weise (s. EP 0 241 276 A1 oder EP 0 432 318 A1) die Ähren vom Erntegut 76 ab, indem er sie mittels eines in Drehung versetzten Rotors und daran angebrachten Abstreifmitteln von den Halmen abzieht. Im linken und rechten Abschnitt 52, 54 (nicht aber im mittleren Abschnitt 50) sind rückwärtig des Abstreifers 56 Querfördereinrichtungen 58 angeordnet, welche die abgestreiften Ähren zum mittleren Abschnitt 50 transportieren. Die Querfördereinrichtungen 58 sind in den Figuren 2 bis 8 als Querförderschnecken mit darunter angeordneten Trögen 68 ausgeführt, obwohl sie in einer anderen Ausführungsform auch als Fördergurte realisierbar wären. Im mittleren Abschnitt 50 geben die Querfördereinrichtungen 68 die Ähren auf einen unteren Boden 70 ab, auf den auch die vom Abstreifer 56 im mittleren Abschnitt 50 vom Erntegut 76 abgetrennten Ähren fallen. Ein rückwärtiger, oberer Förderer 60 fördert die Ähren unterschlächtig vom Boden 70 des mittleren Abschnitts 50 durch eine rückwärtige Abgabeöffnung 84 des Erntevorsatzes 18 in den Schrägförderer 20. Die Querfördereinrichtungen 68 und der Abstreifer 56 sind durch Haltearme 72 an der Rahmenkonstruktion 44 abgestützt, die durch Aktoren (nicht gezeigt) gegenüber der Rahmenkonstruktion 44 um die Querachse schwenkbar und/oder entlang der Längsachse der Haltearme 72 längenverstellbar sind. Dadurch kann die Position des Abstreifers 56 und der Querfördereinrichtungen 68 in horizontaler und/oder vertikaler Richtung an die Höhe des Ernteguts 68 angepasst werden, wie in der Figur 7 angedeutet, und kann beispielsweise zur Aufnahme von Lagergetreide abgesenkt werden, sei es durch den Bediener des Mähdreschers 10 oder automatisch, analog zu einer an sich bekannten Verstellung einer Haspel und eines Schneidbalkens eines Schneidwerks, vgl. EP 3 430 881 A1.

Der Boden 70 kann, wie in den Figuren gezeigt, passiv, d.h. starr und unbeweglich an der Rahmenkonstruktion 44 befestigt sein, oder er kann als angetriebener Fördergurt oder beliebiger anderer Förderer ausgeführt sein, der das Erntegut oberschlächtig nach hinten zur rückwärtigen Abgabeöffnung 84 fördert.

Das Zusatzschneidwerk 48 umfasst, wie in den Figuren 2 und 3 gezeigt, ein sich über die gesamte Breite des Erntevorsatzes 18 erstreckendes Mähwerk 62 (dessen Mittelteil funktional zur Ernteeinrichtung 46 gehört), sowie jeweils nur im linken und rechten Abschnitt 52, 54 des Erntevorsatzes 18 angeordnete, sich quer zur Vorwärtsrichtung V erstreckende Förderrotoren 74, sich quer zur Vorwärtsrichtung V erstreckende Häckselrotoren 64 und rückwärtig angeordnete Auswurfhauben 66. Das Zusatzschneidwerk 48 dient, wie oben ausgeführt, dazu die nach dem Abstreifen der Ähren vom Erntegut 76 im Boden verbleibenden Halme durch das Mähwerk 62 vom Boden abzuschneiden und entweder in einem oder mehreren Schwaden auf dem Feld abzulegen oder sie zu Häckseln und über die Breite des Erntevorsatzes 18 verteilt auf dem Feld abzulegen.

Die Förderrotoren 74, Häckselrotoren 64 und Auswurfhauben 66 sind nur im linken und rechten Abschnitt 52, 54 des Erntevorsatzes 18 angeordnet, nicht im mittleren Abschnitt 50. Die im mittleren Abschnitt 50 stehenden Halme des Ernteguts werden somit durch den dort angeordneten mittleren Bereich des Mähwerks 62 (der funktionsmäßig Bestandteil der Ernteeinrichtung 46 ist) abgeschnitten und gelangen direkt auf den Boden 70, auf dem auch die über die gesamte Breite des Erntevorsatzes 18 einlaufenden Ähren des Ernteguts 76 gelangen. Die im mittleren Abschnitt 50 einlaufenden Halme durchlaufen somit den Schrägförderer 20 und den Mähdrescher 10 und werden an dessen rückwärtigem Ende in einem Schwadmodus am Strohhäcksler 42 vorbeigeführt und als Schwad auf dem Feld abgelegt oder in einem Häckselmodus durch den Strohhäcksler 42 geführt und als Häckselgut durch diesem folgende Verteileinrichtungen (in der Figur 1 nicht gezeigt), die auch entfallen oder in eine unwirksame Stellung verbracht werden können, insbesondere falls die Breite des Strohhäckslers 42 näherungsweise der Breite des mittleren Abschnitts 50 entspricht, (vorzugsweise nur) über die Breite des mittleren Abschnitts 50 des Erntevorsatzes 18 verteilt.

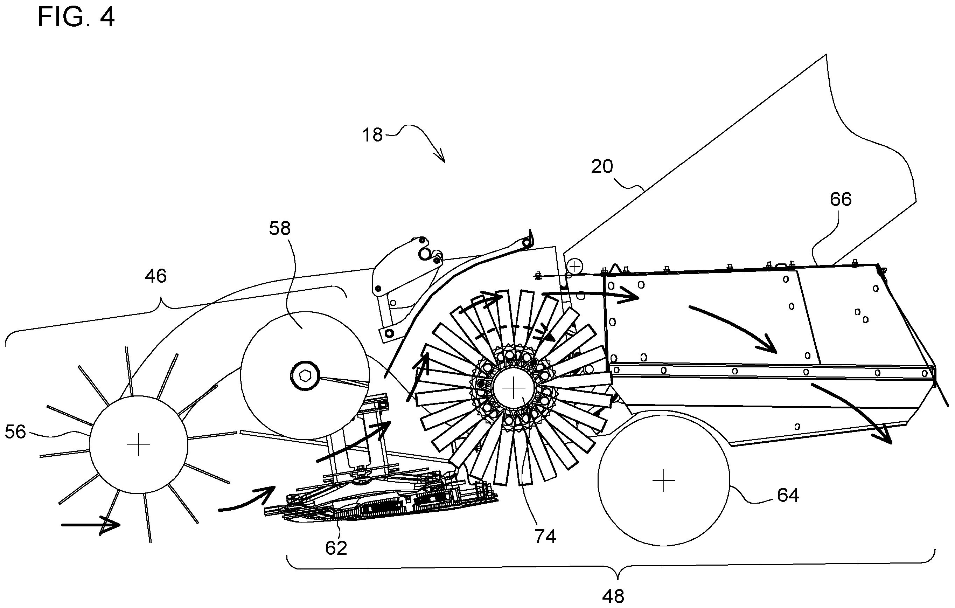

Die Figur 4 zeigt das Zusatzschneidwerk 48 in einem Schwadlegemodus. Das als Scheibenmähwerk 62 ausgeführte Mähwerk 62 trennt die Halme des Ernteguts 76 vom Boden ab. Die im linken und rechten Abschnitt 52, 54 abgetrennten Halme werden vom dort angeordneten Förderrotor 74 erfasst und oberschlächtig gefördert und gegen die Auswurfhaube 66 geschleudert, welche das Häckselgut seitlich zusammenführt und in einem Schwad ablegt. Diese Schwade können jeweils mittig im linken und rechten Abschnitt 52, 54 auf dem Feld abgelegt werden, oder sie werden zur Mitte des Erntevorsatzes 18 geführt und dort unterhalb des Schrägförderers 20 abgelegt. In beiden Fällen vermeidet man, dass die Räder 14, 16 des Mähdreschers 10 über das Schwad fahren. Falls drei Schwade hinter der Arbeitsbreite des Erntevorsatzes abgelegt werden, können diese nacheinander eingesammelt werden, oder sie werden in einem einzigen Arbeitsgang durch eine Ballenpresse oder einen Feldhäcksler mit einer hinreichend breiten Pick-up aufgenommen oder sie werden zuvor noch zu einem einzigen Schwad zusammengeführt.

Bei einer weiteren, nicht gezeigten Ausführungsform können die Auswurfhauben 66 durch Querförderbänder ersetzt werden, welche die Halme in Querrichtung fördern und an einer der im vorhergehenden Absatz erwähnten Stellen ablegen.

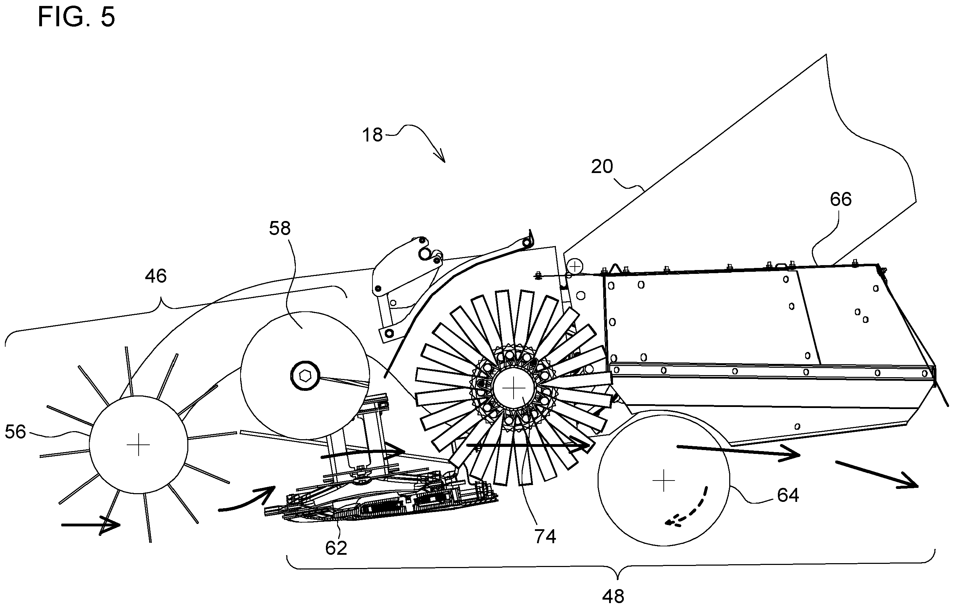

Die Figur 5 zeigt das Zusatzschneidwerk 48 in einem Häckselmodus. Das Mähwerk 62, das auch als bei Schneidwerken üblicher Messerbalken ausgeführt sein kann, trennt die Halme des Ernteguts 76 vom Boden ab. Die im linken und rechten Abschnitt 52, 54 abgetrennten Halme werden vom dort angeordneten Förderrotor 74 erfasst und unterschlächtig gefördert und dem Häckselrotor 64 zugeführt, der sie zerkleinert und über die Breite des linken bzw. rechten Abschnitts 52, 54 verteilt auf dem Feld ablegt. Die Häckselrotoren 64 können in an sich bekannter Weise als Schlegelhäcksler ausgeführt sein, vgl. DE 10 2011 051 981 A1.

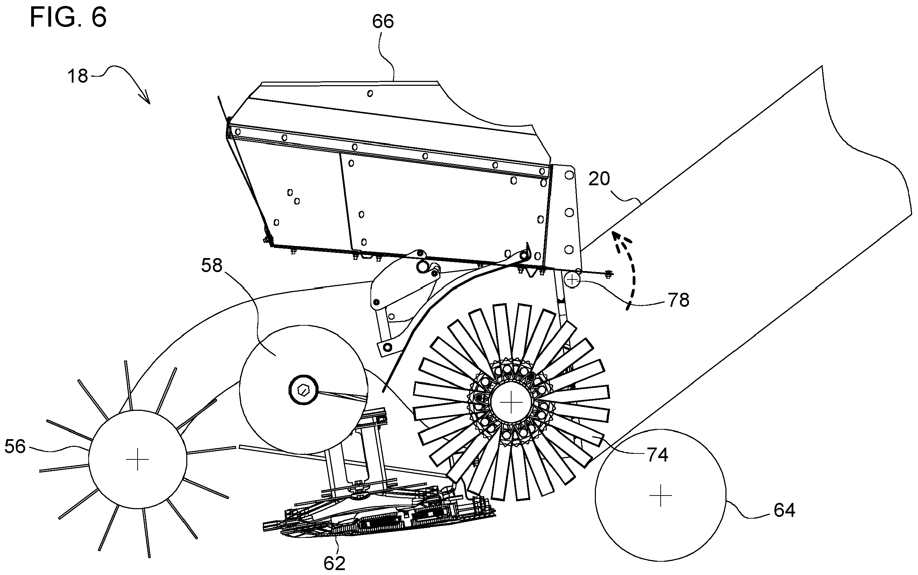

Wie in der Figur 6 gezeigt, können die Auswurfhauben 66 an ihren vorderen, oberen Enden um eine sich horizontal und quer zur Vorwärtsrichtung V erstreckende Schwenkachse 78 an der Rahmenkonstruktion 44 schwenkbar angelenkt sein, damit sie in die in Figur 7 gezeigte Außerbetriebsstellung oberhalb des Erntevorsatzes 18 verbracht werden können, in welcher der Erntevorsatz 18 vom Schrägförderer 20 demontiert und auf einem Schneidwerkstransportwagen abgelegt und zum Transport auf einer Straße hinter dem Mähdrescher 10 hergezogen werden kann. Das Verschwenken der Auswurfhauben 66 kann von Hand durch einen Bediener oder durch einen Aktor (nicht gezeigt) erfolgen.

In der Figur 7 ist eine Ausführungsform dargestellt, bei welcher die Förderrotoren 74 für den Häckselbetrieb in eine angehobene Stellung verbracht werden, in welchem ihr Antrieb deaktiviert werden kann. Für den Schwadlegebetrieb werden die Förderrotoren 74 abgesenkt und ihr Antrieb aktiviert. Das Verstellen zwischen Betriebs- und Außerbetriebsstellung kann von Hand durch den Bediener oder durch einen Aktor erfolgen.

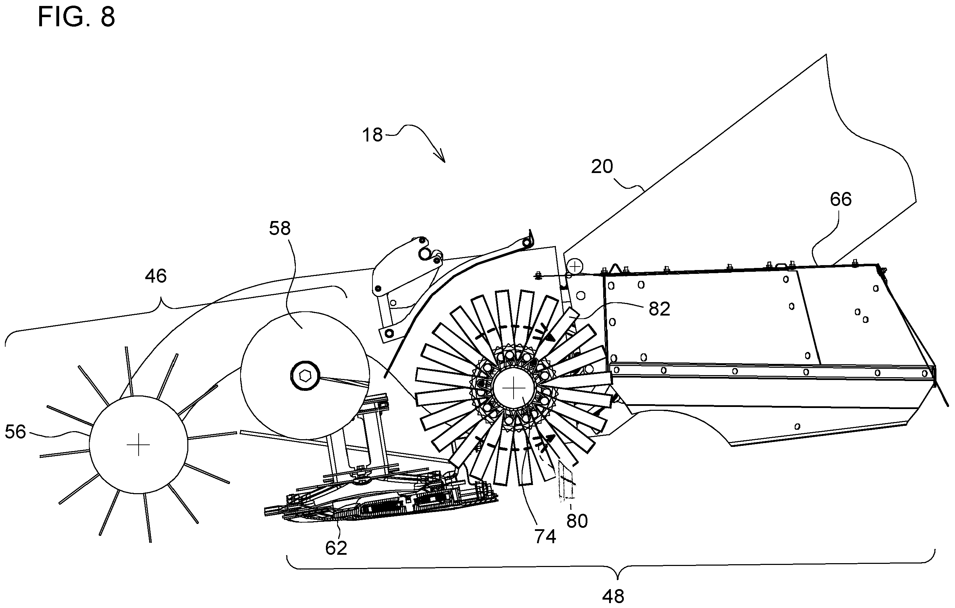

Bei der Ausführungsform nach Figur 8 sind die Häckselrotoren 64 entfallen und ihre Funktion wird durch die Förderrotoren 74 übernommen, die im Häckselbetrieb, analog zur Figur 5, unterschlächtig arbeiten und mit Gegenmessern 80 zusammenwirken, die jeweils zwischen den Reihen von Mitnehmern 82 eintauchen, die in axialer und Umfangsrichtung über die Förderrotoren 74 verteilt sind. Hierbei können die im Häckselbetrieb vorlaufenden Flanken der Mitnehmer 82 und/oder die damit zusammenwirkenden, vorderen Flächen der Gegenmesser 80 geschärft sein.

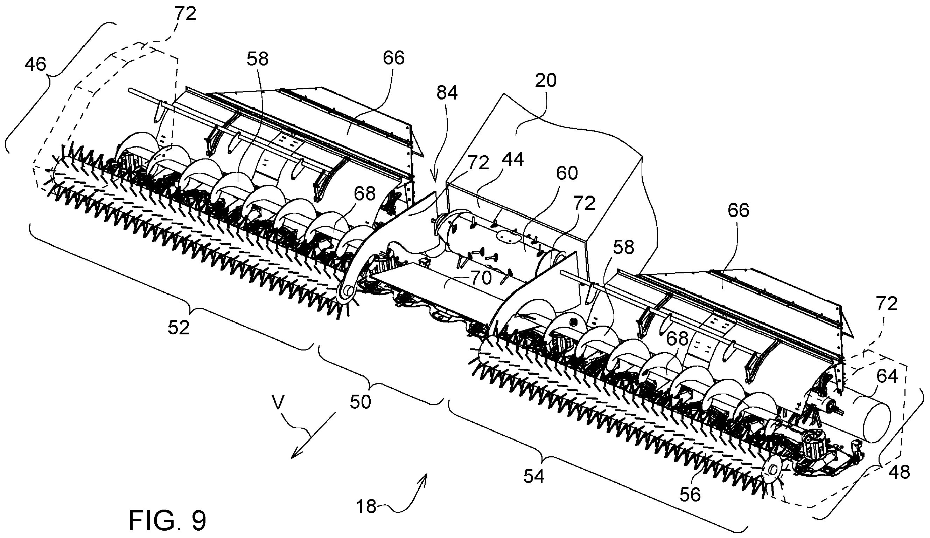

Da im mittleren Abschnitt 50 einlaufendes Erntegut 76 durch den dort angeordneten Teil des Mähwerks 62 abgeschnitten wird, ist es grundsätzlich nicht erforderlich, im mittleren Abschnitt 50 des Erntevorsatzes 18 einen Abstreifer 56 anzubringen. Bei der Ausführungsform nach Figur 9 ist somit der Abstreifer 56 im mittleren Abschnitt 50 entfallen.

Es sei noch angemerkt, dass der Antrieb des Abstreifers 56, der Querfördereinrichtungen 68, des Mähwerks 62 sowie der Förderrotoren 74, und Häckselrotoren 64 in an sich bekannter Weise über mechanische Antriebsstränge vom Schrägförderer 20 her erfolgen kann. Bei Nichtgebrauch z.B. der Häckselrotoren 64 im Schwadablagemodus der Figur 4 oder der gemäß Figur 7 im Häckselmodus in eine unwirksame, angehobene Stellung versetzten Förderrotoren 74 kann der jeweilige Antriebsstrang durch eine Kupplung aufgetrennt werden. Alternativ kann einem oder mehreren der besagten Elemente (Abstreifer 56, Querfördereinrichtungen 68, Mähwerk 62, Förderrotoren 74, Häckselrotoren 64) ein elektrisch oder hydraulisch betriebener Motor zugeordnet werden.

Zudem könnten die Abstreifer 56 durch übliche, im Hochschnittmodus arbeitende Mähwerksbalken und Haspeln ersetzt werden (s. beispielsweise DE 10 2005 025 319 A1). Analog zu den Figuren 2 und 9 kann im mittleren Abschnitt der Mähwerksbalken und die Haspel vorhanden sein (wie in Figur 2) oder entfallen (wie in Figur 9).

Im Ergebnis ist erkennbar, dass die Mit-Aufnahme der Halme des im mittleren Abschnitt 50 einlaufenden Ernteguts 76 in den Schrägförderer 20 und somit in den Mähdrescher 10 eine Reihe an Vorteilen hat. So wird vermieden, dass die Dresch- und Trenneinrichtungen des Axialdreschwerks 22 (oder eines Tangentialdreschwerks mit nachfolgenden Trennrotoren oder Strohschüttlern) eine zu aggressive Wirkung auf die Körner des Ernteguts ausüben, da sichergestellt ist, dass auch ein gewisser Anteil an Halmen (Stroh) mitgefördert wird, welcher die Wirkung der Dresch- und Trenneinrichtung in gewissem Maße weniger aggressiv werden lässt. Zudem vermeidet man, dass man das Zusatzschneidwerk 48 unterhalb des Schrägförderers 20 anbringen muss, was die konstruktiven Möglichkeiten für das Zusatzschneidwerk 48 verbessert, und man kann den Schrägförderer 20 auch relativ weit absenken, was die Verwendung eines Abstreifers 56 sogar zur Aufnahme von Lagergetreide ermöglicht.

## Patentansprüche

1. Erntevorsatz (18) für einen Mähdrescher (10) zur Ernte von Erntegut (76) mit an Halmen wachsenden Körnern, mit einer in einer Vorwärtsrichtung (V) über ein Feld bewegbaren Rahmenkonstruktion (44), an der eine sich über die gesamte Breite des Erntevorsatzes (18) erstreckende Ernteeinrichtung (46) zur Ernte der Körner des Ernteguts (76), deren Erntegutstrom durch eine rückwärtige Abgabeöffnung (84) des Erntevorsatzes (18) einem Schrägförderer (20) des Mähdreschers (10) zuführbar ist, sowie ein Zusatzschneidwerk (48) zur Bearbeitung der nach der Ernte der Körner durch die Ernteeinrichtung (46) auf dem Feld verbleibenden Halme angebracht sind, wobei der Erntevorsatz (18) einen dem Schrägförderer (20) vorgelagerten, mittleren Abschnitt (50), sowie gegenüber dem mittleren Abschnitt (50) jeweils seitlich versetzt einen linken Abschnitt (54) und einen rechten Abschnitt (52) umfasst, **dadurch gekennzeichnet, dass** der Erntevorsatz (18) konfiguriert ist, im mittleren Abschnitt (50) einlaufende Halme gemeinsam mit den Körnern dem Schrägförderer (20) zuzuführen.

2. Erntevorsatz (18) nach Anspruch 1, wobei das Zusatzschneidwerk (48) nur dem linken und rechten Abschnitt (54, 56) zugeordnet ist.

3. Erntevorsatz (18) nach Anspruch 1 oder 2, wobei im mittleren Abschnitt (50) ein Mähwerk (62) zum Abschneiden der im mittleren Abschnitt (50) stehenden Halme vorhanden ist.

4. Erntevorsatz (18) nach einem der Ansprüche 1 bis 3, wobei die Ernteeinrichtung (46) im linken und rechten Abschnitt (52, 54) jeweils einen Abstreifer (56) oder im Hochschnittmodus arbeitende Mähwerksbalken und Haspeln umfasst.

5. Erntevorsatz (18) nach Anspruch 4, wobei die Ernteeinrichtung (46) auch im mittleren Abschnitt (50) einen Abstreifer (56) oder einen im Hochschnittmodus arbeitenden Mähwerksbalken und eine Haspel umfasst.

6. Erntevorsatz (18) nach einem der Ansprüche 3 bis 5, wobei die Ernteeinrichtung (46) im linken und rechten Abschnitt (52, 54) jeweils eine Querfördereinrichtung (58) umfasst, die das Erntegut einem im mittleren Bereich (50) angeordneten Boden (70) zuführt, auf den auch vom Mähwerk (62) im mittleren Abschnitt abgeschnittene Halme gelangen und von dem aus das Erntegut durch die Abgabeöffnung (84) dem Schrägförderer (20) zuführbar ist.

7. Erntevorsatz (18) nach einem der Ansprüche 1 bis 6, wobei das Zusatzschneidwerk (48) ein Mähwerk (62) zum Abschneiden der Halme und einen Förderrotor (74) umfasst, der in einer Schwadlegebetriebsart zum Fördern der abgeschnittenen Halme zu einer Auswurfhaube (66) oder einem Querförderband zwecks Ablage der Halme in einem Schwad betreibbar ist.

8. Erntevorsatz (18) nach Anspruch 7, wobei die Auswurfhaube (66) an ihren vorderen, oberen Enden um eine sich horizontal und quer zur Vorwärtsrichtung V erstreckende Schwenkachse (78) an der Rahmenkonstruktion (44) schwenkbar angelenkt ist, um sie in eine Außerbetriebsstellung oberhalb des Erntevorsatzes (18) zu verbringen, in welcher der Erntevorsatz (18) vom Schrägförderer (20) demontiert und auf einem Schneidwerkstransportwagen abgelegt und zum Transport auf einer Straße hinter dem Mähdrescher (10) hergezogen werden kann.

9. Erntevorsatz (18) nach Anspruch 7 oder 8, wobei der Förderrotor (74) in einer Häckselbetriebsart in eine deaktivierte, angehobene Stellung verbringbar oder einer gegenüber der Schwadlegebetriebsart umgekehrten Drehrichtung antreibbar ist, in der der Förderrotor (74) die Halme einem Häckselrotor (64) zuführt oder im Zusammenwirken mit Gegenmessern (80) zerkleinert.

10. Mähdrescher (10) mit einem Erntevorsatz (18) nach einem der vorhergehenden Ansprüche.
